# EUROPEAN PATENT SPECIFICATION

(11) **EP 1 429 433 B1**
(45) Date of publication and mention of the grant of the patent: **20.02.2008**
(21) Application number: 03028299.0
(22) Date of filing: 10.12.2003
(51) Int. Cl.: H01S 3/067, H01S 3/094

(54) **Thulium-doped fiber amplifier**
Thuliumdotierer Faserverstärker
Amplificateur à fibre dopée de thulium

(30) Priority: 14.12.2002 KR 2002080024
(43) Date of publication of application: 16.06.2004
(73) Proprietor: SAMSUNG ELECTRONICS CO., LTD., Suwon-city, Gyeonggi-do (KR)
(72) Inventor: Hwang, Seong-Taek, Suwon-si Gyeonggi-do (KR); Oh, Yun-Je, Suwon-si Gyeonggi-do (KR)
(74) Representative: Grünecker, Kinkeldey, Stockmair & Schwanhäusser Anwaltssozietät

(56) References cited:
- EP-A- 1 039 593
- EP-A- 1 263 097
- US-A1- 2002 118 444

## Description

### BACKGROUND OF THE INVENTION

### 1. Field of the Invention

The present invention relates to an optical communication system, and in particular to a wideband amplifier with at least one erbium-doped fiber.

### 2. Description of the Related Art

Recently, exponential growth in data usage, transfers, etc., has forced wavelength division multiplexing (WDM) optical communication systems to expand their transmission bandwidth. For this reason, wideband communication systems that simultaneously use a C-band between 1530 nm to 1560 nm (conventional band), an L-band between 1570 nm to 1600 nm (long band) and an S-band between 1450 nm to 1500 nm have been studied. Fiber amplifiers that function to amplify optical signals in optical communication systems that included erbium-doped fiber amplifiers (EDFAs) have been widely used. Such EDFAs have a bandwidth limited to about 30nm with respect to both the C-band and L-band. The S-band has also been used as an EDFA amplifiable band, but the EDFA had difficulty in expanding the S-band. Therefore, other studies have been made regarding a thulium-doped fiber amplifier (TDFA), in which the element, thulium, is used as a new amplifiable medium. However, such TDFAs have a problem, wherein an available pumping light source generally has a wavelength of 1.05/1.56 µm or 1.4/1.56 µm, but a high power laser diode for generating such an wavelength of light is not commercialized yet.

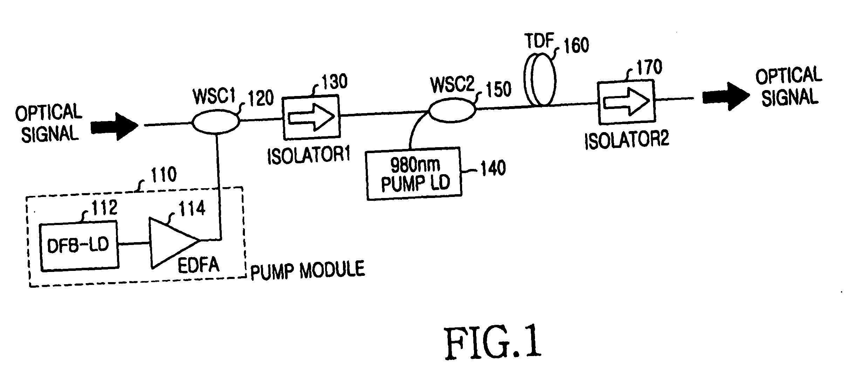

FIG 1 shows a conventional thulium-doped fiber amplifier (TDFA). The TDFA includes a pump module 110 having a distributed feedback (DFB) laser diode 112 and an erbium-doped fiber amplifier (EDFA) 114, a first and second wavelength selective couplers (WSCs) 120 and 150, a first and second isolators 130 and 170, a pumping light source 140 and a thulium-doped fiber (TDF) 160.

In operation, DFB laser diode 112 outputs first pumping light at a wavelength of 1.56 µm. Because the first pumping light has an output lower than a desired output, the output of the first pumping light must be increased. Therefore, EDFA 114 amplifies and outputs the first pumping light. EDFA 114 includes an erbium-doped fiber, a laser diode for outputting pumping light at a wavelength of 0.98 µm to pump the erbium-doped fiber, and a wavelength selective coupler for combining the first pumping light with the power of the erbium-doped fiber. First WSC 120 combines input optical signals belonging to the S-band with the first pumping light and outputs the combined resultants. First isolator 130 is interposed between first WSC 120 and TDF 160 and isolates backward light traveling in a direction opposite to the optical signals. Pumping light source 140 outputs second pumping light at a wavelength of 0.98 µm to pump TDF 160. Second WSC 150 combines the inputted optical signals and first pumping light with the second pumping light and outputs the combined resultants. TDF 160 is pumped by the first and second pumping light, and amplifies and outputs the optical signals. Second isolator 170 is disposed in the rear of TDF 160 and isolates backward light traveling in a direction opposite to the optical signals.

As mentioned above, the conventional TDFA makes use of pumping light at a wavelength of 0.98/1.56 µm, and uses a commercialized laser diode as the pumping light source. In this case, a commercialized high power laser diode may be used as the pumping light source generating pumping light at a wavelength of 0.98 µm, but a high power laser diode generating pumping light at a wavelength of 1.56 µm is not commercially available at this time. For this reason, pumping light outputted from a typical low power DFB laser diode is amplified by the EDFA, and such amplified pumping light is often used. For this reason, both a DFB laser diode for 1.56 µm and an EDFA are needed separately. This leads to a high price load, a large volume, and difficult system integration.

The thulium doped amplifier fiber of the laser amplifier disclosed in EP-A-1 039 593 is pumped in a similar way by two light sources: an yttrium fiber laser that produces light in the 1.05 µm wavelength band and light source including an EDFA that produces amplified light in the 1.55 µm wavelength band. Furthermore, document US-A-2002/0118444 can be mentioned, which discloses how to redirect C-band ASE travelling in a direction opposite to the signal direction to use it as additional pump light in an L-band optical amplifier.

### SUMMARY OF THE INVENTION

Accordingly, the present invention has been made to reduce or overcome the above-mentioned limitations occurring in the prior art. One aspect of the present invention is to provide a thulium-doped fiber amplifier employing a pumping structure using only a commercialized high power pumping light source to amplify optical signals belonging to the S-band, thereby allowing for reduction of volume as well as enhancement of price-based competition, as compared with the prior art.

In accordance with the principles of the present invention, a thulium-doped fiber amplifier is provided comprising a thulium-doped fiber for amplifying optical signals belonging to S-band; a first pumping unit comprising an erbium doped fiber for outputting amplified spontaneous emission which represents a peak value in a preset wavelength range belonging to C-band to pump the thulium-doped fiber; and a second pumping unit for outputting pumping light belonging to a wavelength band different to the C-band and to pump the thulium-doped fiber, wherein the first pumping unit is configured to form a loop in a circulating path of the amplified spontaneous emission, through which a predetermined part of the amplified spontaneous emission generated to pump the thulium-doped fiber is circulated to be reused in the first pumping unit, and the first pumping unit further comprises a splitter to split output power of the erbium-doped fiber, and coupled to form the loop as the circulating path for the split amplified spontaneous emission with a second wavelength selective coupler to coupler the part of the circulating amplified spontaneous emission into the erbium-doped fiber and a filter disposed on the loop, to filter the circulating amplified spontaneous emission based on a predetermined transmission wavelength belonging to the C-band

### BRIEF DESCRIPTION OF THE DRAWINGS

The present invention will be more apparent from the following detailed description taken in conjunction with the accompanying drawings, in which:
FIG 1 shows a conventional thulium-doped fiber amplifier;
FIG 2 shows a thulium-doped fiber amplifier according to one illustrative embodiment of the present invention; and
FIG 3 shows a configuration of a thulium-doped fiber amplifier according to a an other illustrative embodiment of the present invention

### DETAILED DESCRIPTION OF THE PREFERRED EMBODIMENT

Hereinafter, preferred embodiments of the present invention will be described in detail with reference to the accompanying drawings. For the purposes of clarity and simplicity a detailed description of known functions and configurations incorporated herein will be omitted as it may make the subject matter of the present invention rather unclear.

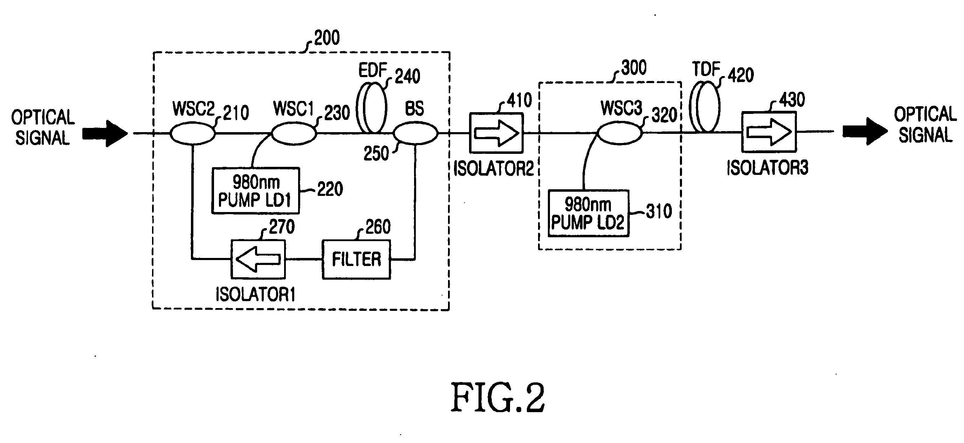

FIG 2 shows a thulium-doped fiber amplifier (TDFA) according to one illustrative embodiment of the present invention. The TDFA includes a first pumping unit 200, a second and third isolators 410 and 430, a second pumping unit 300 and a TDF 420.

First pumping unit 200 outputs amplified spontaneous emission (ASE), which represents a peak value in a preset wavelength range belonging to the C-band, to pump TDF 420. First pumping unit 200 includes first and second WSCs 230 and 210, a first pumping light source 220, an erbium-doped fiber (EDF) 240, a splitter 250, a filter 260 and a first isolator 270.

Second WSC 210 is disposed in the front of EDF 240, combines optical signals belonging to the inputted S-band with the filtered ASE belonging to the C-band and outputs the combined resultants.

First pumping light source 220 outputs pumping light at a wavelength of 0.98 µm to pump EDF 240. A pump laser diode outputting light at a wavelength of 0.98 µm may be used as first pumping light source 220.

First WSC 230 combines the pumping light which is inputted from first pumping light source 220 with the optical signals and the filtered ASE which are inputted through second WSC 210, and outputs the combined resultants.

EDF 240 is pumped by the pumping light inputted through first WSC 230, so that the EDF 240 generates ASE. Further, EDF 240 amplifies and outputs the filtered ASE inputted through first WSC 230 using stimulated emission of erbium ions. EDF 240 is optimized to obtain high power at a wavelength of 1.56 µm, so that the S-band optical signals inputted through first WSC 230 pass through the EDF without a loss.

Splitter 250 is disposed in the rear of EDF 240, and forms a loop as a circulating path of the ASE together with the second WSC 210. The splitter splits power of the inputted ASE, outputs a part of the split power of the ASE (e.g., 10%) to the loop, and outputs the other (e.g., 90%) to the second isolator. The ASE inputted into the loop circulates along to the loop. A beam splitter which splits power of inputted light at a ratio of 1 : 9 may be used as splitter 250.

Filter 260 is disposed on the loop and filters and outputs the circulating ASE based on a preset transmission wavelength range belonging to the C-band. That is to say, filter 260 transmits only a component of light having a preset wavelength of 1.56 µm from among the inputted ASE, and it blocks the others.

First isolator 270 is also disposed on the loop, transmits the ASE which passes through filter 260, and blocks backward light traveling in a direction opposite to the transmitted ASE. That is, first isolator 270 blocks light inputted from second WSC 210.

The filtered ASE is inputted into second WSC 210. Second WSC 210 combines the filtered ASE and the optical signals and outputs the combined resultants. In the course of this circulation, first pumping unit 200 outputs high-power ASE having a wavelength of 1.56 µm.

Second isolator 410 is disposed between splitter 250 and a second pumping unit 300, so that the second isolator transmits the optical signals and ASE which are inputted from splitter 250 but blocks backward light traveling in a direction opposite to the transmitted ASE.

Second pumping unit 300 outputs pumping light belonging to the wavelength band different to the C-band to pump TDF 420. Second pumping unit 300 includes a second pumping light source 310 and a third WSC 320.

Second pumping light source 310 outputs pumping light at a wavelength of 0.98 µm TDF 420. A pump laser diode outputting light at a wavelength of 0.98 µm may be used as second pumping light source 310.

Third WSC 320 combines the pumping light which is inputted from second pumping light source 310, and the optical signals and the filtered ASE which are inputted through second isolator 410, and outputs the combined resultant

TDF 420 is pumped by the pumping light and ASE which are inputted through the third WSC 320, so that TDF 420 amplifies and outputs optical signals passing through the same.

Third isolator 430 is also disposed in the rear of TDF 420, transmits the optical signals inputted through TDF 420, and blocks backward light traveling in a direction opposite to the transmitted optical signals.

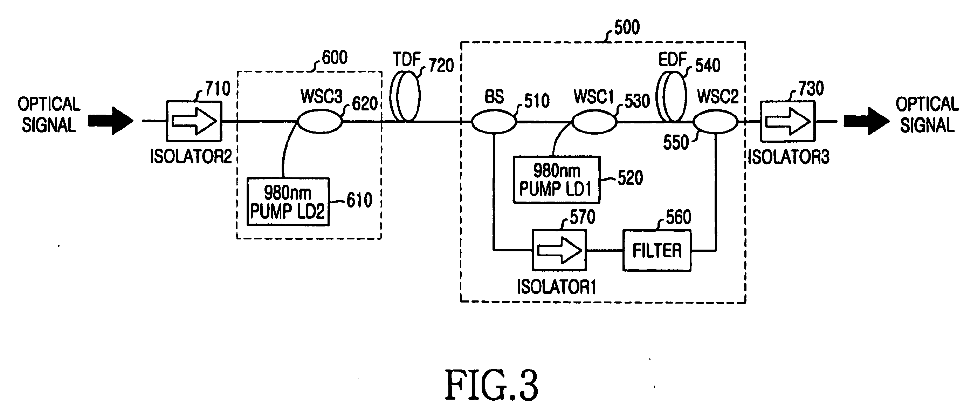

FIG 3 shows a thulium-doped fiber amplifier (TDFA) according to an other illustrative embodiment of the present invention.

The TDFA includes second and third isolators 710 and 730, a second pumping unit 600, a thulium-doped fiber (TDF) 720, and a first pumping unit 500.

Second isolator 710 is disposed in the front of second pumping unit 600, transmits inputted optical signals and blocks backward light traveling in a direction opposite to the transmitted optical signals.

Second pumping unit 600 outputs pumping light to pump TDF 720. Second pumping unit 600 includes a second pumping light source 610 and a third wavelength selective coupler (WSC) 620.

Second pumping light source 610 outputs pumping light at a wavelength of 0.98 µm to pump TDF 720. A pump laser diode outputting light at a wavelength of 0.98 µm may be used as second pumping light source 610.

Third WSC 620 combines the pumping light which is inputted from second pumping light source 610 with the optical signals which are inputted through second isolator 710, and outputs the combined resultant.

TDF 720 is pumped by the pumping light inputted through third WSC 620 and the ASE inputted through first pumping unit 500, so that TDF 720 amplifies and outputs the optical signals passing through the same.

First pumping unit 500 outputs ASE, which represents a peak value in a preset wavelength range belonging to the C-band, so as to pump the TDF 720. First pumping unit 500 includes a splitter 510, a first pumping light source 520, a first WSC 530, an EDF 540, a second WSC 550, a filter 560 and a first isolator 570.

Splitter 510 is disposed in the rear of TDF 720, and forms a loop as a circulating path of the ASE together with second WSC 550. Splitter 510 splits power of the inputted ASE, outputs a part of the split power of the ASE (e.g., 10%) to the loop, and outputs the other (e.g., 90%) to TDF 720. The ASE inputted into the loop circulates along to the loop. A beam splitter which splits power of inputted light at a ratio of 1 : 9 may be used as splitter 510.

First pumping light source 520 outputs pumping light at a wavelength of 0.98 µm to pump EDF 540. As first pumping light source 520, a pump laser diode outputting light at a wavelength of 0.98 µm may be used.

First WSC 530 combines the pumping light which is inputted from first pumping light source 520 with the optical signals which are inputted through splitter 510, and outputs the combined resultants. Further, first WSC 530 transmits the ASE which is generated at EDF 540 to proceed in a direction opposite to outputted resultants.

EDF 540 is pumped by the pumping light inputted through first WSC 530, so that EDF 540 generates ASE. Further, EDF 540 amplifies and outputs the filtered ASE, which is inputted through second WSC 550, using stimulated emission of erbium ions. EDF 540 is optimized to obtain high power at a wavelength of 1.56 µm, so that the S-band optical signals inputted through the first WSC 530 are amplified within EDF 540 or pass through EDF 540 without being absorbed.

Second WSC 550 is disposed in the rear of EDF 540. Second WSC 550 outputs optical signals belonging to the inputted S-band to the side of third isolator 730 and outputs the filtered ASE belonging to the C-band to the side of EDF 540.

First isolator 570 is disposed on the loop, transmits the ASE, and blocks backward light traveling in a direction opposite to the transmitted ASE. That is, first isolator 570 blocks light inputted from filter 560.

Filtered ASE passing through filter 560 is inputted into the second WSC 550. Second WSC 550 outputs the filtered ASE-to EDF 540. In the course of this circulation, first pumping unit 500 outputs high-power ASE having a wavelength of 1.56 µm.

Third isolator 730 is disposed in the rear of the second WSC 550, transmits optical signals inputted through the second WSC 550, and blocks backward light traveling in a reverse direction.

Advantageously, as can be seen from the foregoing, the TDFA according to the present invention employs a pumping structure using only a commercialized high power pumping light source to amplify optical signals belonging to the S-band. Thus, a reduction of volume is achieved and it enhances price-based competition, as compared with the prior art.

## Claims

1. A thulium-doped fiber amplifier comprising:
a thulium-doped fiber (420, 720) to amplify optical signals belonging to S-band;
a first pumping unit (200, 500) comprising an erbium doped fiber (240, 540) to output amplified spontaneous emission that represents a peak value in a predetermined wavelength range belonging to C-band to pump the thulium-doped fiber (420, 720); and
a second pumping unit (300, 600) to output pumping light belonging to a wavelength band different to the C-band to pump the thulium-doped fiber,
**characterized in that**
the first pumping unit (200, 500) is configured to form a loop in a circulating path of the amplified spontaneous emission, through which a predetermined part of the amplified spontaneous emission generated to pump the thulium-doped fiber is circulated to be reused in the first pumping unit (200, 500), and
the first pumping unit (200, 500) comprises:
a splitter (250, 510) to split output power of the erbium-doped fiber (240, 540), and coupled to form the loop as the circulating path for the split amplified spontaneous emission with a second wavelength selective coupler (210, 550) to couple the part of the circulating amplified spontaneous emission into the erbium-doped fiber 240, 540; and
a filter (260, 560), disposed on the loop, to filter the circulating amplified spontaneous emission based on a predetermined transmission wavelength belonging to the C-band.

2. The thulium-doped fiber amplifier according to claim 1, wherein the first pumping unit (200, 500) includes a pump laser diode (220, 520) outputting light at a predetermined wavelength.

3. The thulium-doped fiber amplifier according to claim 1 or 2, wherein the second pumping unit (300, 600) includes a pump laser diode (310, 610) outputting light at a predetermined wavelength.

4. The thulium-doped fiber amplifier according to claim 2 or 3, wherein the predetermined wavelength for the first and second **pumping units (200, 500, 300, 600) is 0.98 µm.**

5. The thulium-doped fiber amplifier according to claim 1, 2, 3, or 4, wherein
the second wavelength selective coupler (210, 550) is disposed on one side of the erbium-doped fiber (240, 540); and
the splitter(250, 510) is disposed on the other side of the erbium-doped fiber.

6. The thulium-doped fiber amplifier according to one of the claims 1 to 5, wherein the first pumping unit (200, 500) further comprises:
a first pumping light source (220, 520) to output pumping light to pump the erbium-doped fiber (240, 540); and
a first wavelength selective coupler (230, 530) to combine the pumping light of the first pumping light source (220, 520) with the optical signals.

7. The thulium-doped fiber amplifier according to one of the claims 1 to 6, wherein the first pumping unit (200, 500) further comprises a first isolator (270, 560), disposed on the loop, to transmit the amplified spontaneous emission in one direction.

8. The thulium-doped fiber amplifier according to one of the claims 1 to 7, wherein the second pumping unit (300, 600) further comprises:
a second pumping light source (310, 610) to output pumping light belonging to the wavelength band different to the C-band to pump the thulium-doped fiber; and
a third wavelength selective coupler (320, 620) to combine the pumping light of the second pumping light source (310, 610) with the optical signals.

9. The thulium-doped fiber amplifier according to one of the claims 1 to 8, further comprises a second isolator (410), disposed between the first and second pumping units (200, 300), to block light inputted from the side of the thulium-doped fiber (420), wherein the first pumping unit (200) is disposed in the front of the thulium-doped fiber (420) and performs front-pumping of the thulium-doped fiber (420).

10. The thulium-doped fiber amplifier according to one of the claims 1 to 8, wherein the first pumping unit (500) is disposed in the rear of the thulium-doped fiber (720) and performs rear-pumping of the thulium-doped fiber (720).

## Patentansprüche

1. Ein thuliumdotierter Faserverstärker, umfassend:
eine thuliumdotierte Faser (420, 720) zum Verstärken von optischen zum S-Band gehörenden Signalen;
eine erste Pumpeinheit (200, 500), eine erbiumdotierte Faser (240, 540) zum Ausgeben einer verstärkten spontanen Emission mit einem Höchstwert in einem bestimmten Wellenlängenbereich des C-Band umfassend, zum Pumpen der thuliumdotierten Faser (420, 720);
eine zweite Pumpeinheit (300, 600) zum Ausgeben von Pumplicht eines anderen Wellenlängenbandes als das C-Band, zum Pumpen der thuliumdotierten Faser;
**dadurch gekennzeichnet, dass**
die erst Pumpeinheit (200, 500) so ausgebildet ist, dass sie eine Schleife bildet in einem Zirkulationspfad der verstärkten spontanen Emission, wodurch ein bestimmter Teil der verstärkten spontanen Emission, erzeugt um den thuliumdotierten Faser zu pumpen, zirkuliert wird um wiederverwendet zu werden in der ersten Pumpeinheit (200, 500), und
die erste Pumpeinheit (200, 500) umfasst:
einen Splitter (250, 510) zum Teilen der Ausgangsleistung der erbiumdotierten Faser (240, 540), und so verbunden dass die Schleife vom Zirkulationspfad für die geteilte verstärkte spontane Emission mit einem zweiten wellenlängenselektiven Koppler (210, 550) gebildet wird, um den Teil der zirkulierenden verstärkten spontanen Emission in die erbiumdotierte Faser (240, 540) einzukoppeln; und
ein Filter (260, 560), in der Schleife angeordnet, um die zirkulierende verstärkte spontane Emission zu filtern basierend auf eine bestimmte zum C-Band gehörende Übertragungswellenlänge.

2. Der thuliumdotierte Faserverstärker nach Anspruch 1,
wobei die erste Pumpeinheit (200, 500) eine Pumplaserdiode (220, 520) umfasst, die Licht von einer bestimmten Wellenlänge ausgibt.

3. Der thuliumdotierte Faserverstärker nach Anspruch 1 oder 2,
wobei die zweite Pumpeinheit (300, 600) eine Pumplaserdiode (310, 610) umfasst, die Licht von einer bestimmten Wellenlänge ausgibt.

4. Der thuliumdotierte Faserverstärker nach Anspruch 2 oder 3,
wobei die bestimmte Wellenlänge für die erste und die zweite Pumpeinheit (200, 500, 300, 600) 0,98 µm ist.

5. Der thuliumdotierte Faserverstärker nach Anspruch 1, 2, 3, oder 4,
wobei der zweite wellenlängenselektive Koppler (210, 550) auf einer Seite der erbiumdotierten Faser (240, 540) angeordnet ist; und
der Splitter (250, 510) auf der anderen Seite der erbiumdotierten Faser angeordnet ist.

6. Der thuliumdotierte Faserverstärker nach einem der Ansprüche 1 bis 5, wobei die erste Pumpeinheit (200, 500) weiterhin umfasst:
eine erste Pumplichtquelle (220, 520) um Pumplicht auszugeben zum Pumpen der erbiumdotierten Faser (240, 540); und
eine erste wellenlängenselektiven Koppler (230, 530) zum kombinieren von Pumplicht von der ersten Pumplichtquelle (220, 520) mit optischen Signalen.

7. Der thuliumdotierte Faserverstärker nach einem der Ansprüche 1 bis 6, wobei die erste Pumpeinheit (200, 500) weiterhin einen ersten Isolator (270, 560) umfasst, in der Schleife angeordnet, um die verstärkte spontane Emission in eine Richtung durchzulassen.

8. Der thuliumdotierte Faserverstärker nach einem der Ansprüche 1 bis 7, wobei die zweite Pumpeinheit (300, 600) weiterhin umfasst:
eine zweite Pumplichtquelle (310, 610) um zum anderen Wellenlängenband als das C-Band gehörendes Pumplicht auszugeben, zum Pumpen der thuliumdotierten Faser; und
eine dritte wellenlängenselektive Koppler (320, 620) zum kombinieren von Pumplicht von der zweiten Pumplichtquelle (310, 610) mit optischen Signalen.

9. Der thuliumdotierte Faserverstärker nach einem der Ansprüche 1 bis 8, weiterhin umfassend:
einen zweiten Isolator (410), zwischen der ersten und der zweiten Pumpeinheit (200, 300) angeordnet, um von der Seite der thuliumdotierten Faser (420) eingegebenes Licht zu blockieren,
wobei die erste Pumpeinheit (200) vor der thuliumdotierten Faser (420) angeordnet ist und Vorwärtspumpen der thuliumdotierten Faser (420) durchführt.

10. Der thuliumdotierte Faserverstärker nach einem der Ansprüche 1 bis 8, wobei die erste Pumpeinheit (500) hinter der thuliumdotierten Faser (720) angeordnet ist und Rückwärtspumpen der thuliumdotierten Faser (720) durchführt.

## Revendications

1. Amplificateur à fibre dopée au thulium, comprenant :
une fibre dopée au thulium (420, 720), afin d'amplifier des signaux optiques appartenant à la bande S ;
une première unité de pompage (200, 500), comprenant une fibre dopée à l'erbium (240, 540) afin de produire en sortie une émission spontanée amplifiée qui représente une valeur de pic dans une plage prédéterminée de longueurs d'onde appartenant à la bande C, afin de pomper la fibre dopée au thulium (420, 720) ; et
une deuxième unité de pompage (300, 600) afin de produire en sortie une lumière de pompage appartenant à une bande de longueurs d'onde différente de la bande C, afin de pomper la fibre dopée au thulium,
**caractérisé en ce que** :
la première unité de pompage (200, 500) est configurée pour former une boucle dans un trajet de circulation de l'émission spontanée amplifiée, au travers de laquelle circule une partie prédéterminée de l'émission spontanée amplifiée produite pour pomper la fibre dopée au thulium, afin d'être réutilisée dans la première unité de pompage (200, 500), et
la première unité de pompage (200, 500) comprend :
un diviseur (250, 510) afin de diviser la puissance de sortie de la fibre dopée à l'erbium (240, 540) et couplé afin de former la boucle servant de trajet de circulation pour l'émission spontanée amplifiée divisée avec un deuxième coupleur sélectif en longueur d'onde (210, 550), afin de coupler la partie de l'émission spontanée amplifiée qui circule vers la fibre dopée à l'erbium (240, 540) ; et
un filtre (260, 560), implanté sur la boucle, afin de filtrer l'émission spontanée amplifiée qui circule sur la base d'une longueur d'onde d'émission prédéterminée appartenant à la bande C.

2. Amplificateur à fibre dopée au thulium selon la revendication 1, dans lequel la première unité de pompage (200, 500) comprend une diode laser de pompage (220, 520) fournissant en sortie de la lumière à une longueur d'onde prédéterminée.

3. Amplificateur à fibre dopée au thulium selon la revendication 1 ou 2, dans lequel la deuxième unité de pompage (300, 600) comprend une diode laser de pompage (310, 610) fournissant en sortie de la lumière à une longueur d'onde prédéterminée.

4. Amplificateur à fibre dopée au thulium selon la revendication 2 ou 3, dans lequel la longueur d'onde prédéterminée est de 0,98 µm pour les première et deuxième unités de pompage (200, 500, 300, 600).

5. Amplificateur à fibre dopée au thulium selon la revendication 1, 2, 3 ou 4, dans lequel
le deuxième coupleur sélectif en longueur d'onde (210, 550) est implanté sur un côté de la fibre dopée à l'erbium (240, 540) ; et
le diviseur (250, 510) est implanté sur l'autre côté de la fibre dopée à l'erbium.

6. Amplificateur à fibre dopée au thulium selon l'une des revendications 1 à 5, dans lequel la première unité de pompage (200, 500) comprend en outre :
une première source lumineuse de pompage (220, 520) pour fournir en sortie de la lumière de pompage afin de pomper la fibre dopée à l'erbium (240, 540) ; et
un premier coupleur sélectif en longueur d'onde (230, 530) pour combiner la lumière de pompage de la première source lumineuse de pompage (220, 520) avec les signaux optiques.

7. Amplificateur à fibre dopée au thulium selon l'une des revendications 1 à 6, dans lequel la première unité de pompage (200, 500) comprend en outre un premier isolateur (270, 560), implanté sur la boucle, afin d'émettre l'émission spontanée amplifiée dans une direction.

8. Amplificateur à fibre dopée au thulium selon l'une des revendications 1 à 7, dans lequel la deuxième unité de pompage (300, 600) comprend en outre :
une deuxième source lumineuse de pompage (310, 610) pour fournir en sortie de la lumière de pompage appartenant à une bande de longueurs d'onde différente de la bande C, afin de pomper la fibre dopée au thulium ; et
un troisième coupleur sélectif en longueur d'onde (320, 620) afin de combiner la lumière de pompage de la deuxième source lumineuse de pompage (310, 610) avec les signaux optiques.

9. Amplificateur à fibre dopée au thulium selon l'une des revendications 1 à 8, comprenant en outre un deuxième isolateur (410), implanté entre les première et deuxième unités de pompage (200, 300) afin d'intercepter la lumière introduite par le côté de la fibre dopée au thulium (420), la première unité de pompage (200) étant implantée devant la fibre dopée au thulium (420) et réalisant un pompage frontal de la fibre dopée au thulium (420).

10. Amplificateur à fibre dopée au thulium selon l'une des revendications 1 à 8, dans lequel la première unité de pompage (500) est implantée derrière la fibre dopée au thulium (720) et réalise un pompage arrière de la fibre dopée au thulium (720).
